# EUROPEAN PATENT APPLICATION

(11) **EP 1 772 317 A1**
(43) Date of publication of application: **11.04.2007**
(21) Application number: 05753471.1
(22) Date of filing: 22.06.2005
(51) Int. Cl.: B60R 11/02, B60R 16/02

(54) **ALARM DEVICE**

(30) Priority: 26.07.2004 JP 2004217436
(71) Applicant: MATSUSHITA ELECTRIC INDUSTRIAL CO., LTD., Osaka 571-8501 (JP)
(72) Inventor: MORIMOTO, Akihiro c/o Matsuhita Elec. Ind. Co. Ltd, Chuo-ku, Osaka-shi, Osaka 540-6319 (JP); Hamada, Hiroyuki c/o Matsuhita Elec. Ind. Co. Ltd, Chuo-ku, Osaka-shi, Osaka 540-6319 (JP); KUWABARA, Takashi c/o Matsuhita Elec. Ind. Co. Ltd, Chuo-ku, Osaka-shi, Osaka 540-6319 (JP); NAGASHIMA, Kazumasa c/o Matsuhita El. Ind. Co. Ltd, Chuo-ku, Osaka-shi, Osaka 540-6319 (JP)
(74) Representative: Pautex Schneider, Nicole Véronique
(86) International application number: PCT/JP2005/011419
(87) International publication number: WO 2006/011321

(57) **Abstract**

It is an object of the present invention to provide an image display apparatus which can reduce a burden to be imposed on the vehicle occupants watching TV or the like, and enhance an effect of allowing the vehicle occupants to enjoy comfortable driving. The alarm device comprises motion detecting means **13** for detecting a motion of a vehicle, displaying means **10** located in the vehicle, and adapted to display an image on a screen, and controlling means **8** for controlling, on the basis of the motion of the vehicle detected by the motion detecting means **13,** a display mode in which the image is displayed on the screen by the displaying means **10.**

## Description

### TECHNICAL FIELD OF THE INVENTION

The present invention relates to an alarm device for enhancing an effect of allowing vehicle occupants to enjoy comfortable driving.

### DESCRIPTION OF THE RELATED ART

In recent years, there have been increasing vehicles respectively equipped with display units each of which displays various information on a screen, and more specifically the vehicles respectively equipped with navigation apparatuses each of which has a display unit for displaying a road map on a screen while allowing the center of the screen to correspond to its current position, or the vehicles respectively equipped with display units each of which is provided for a front passenger or rear passengers, and each of which displays an image reproduced in a television, a video tape recorder, a DVD recorder, a game machine and the like.

In each moving vehicle, vehicle occupants are being swung in varying degrees by a vibratory motion resulting from an engine and other driving mechanism, or resulting from the fact that its chassis is rocked, shaken, or shocked by inequalities of the ground, a surface profile of the road, curbstones, and the like, and additionally resulting from an acceleration and a deceleration.

In the above-mentioned surroundings, a central nerve system of each vehicle occupant tends to be messed up (sensory confusion), without sensing his or her position and movement, by recognizing that current sensory information is different from sensory information previously-accumulated in his or her central nerve, and then tries to adapt to his or her environmental change by acknowledging the current sensory information. It is generally believed that he or she gets motion sickness in this process. If, for example, one vehicle occupant keeps his or her eyes trained on a book, and reads the book in moving vehicle, he or she is liable to get motion sickness by reason that visual information is different from each of vestibular information and somatic sensory information. As one method of preventing from the sensory confusion in moving vehicle, it is generally believed that each vehicle occupant can close his or her eyes, or stare into the distance as much as possible. Additionally, it is generally believed that the driver is hard to get motion sickness in comparison with passengers by reason that the driver feels tense by driving a vehicle, and tries to reduce a change of an acceleration by estimating a motion of the vehicle, and by changing his or her head position on the basis of its estimation (See non-patent document 1).

As a method helpful in preventing motion sickness, there have been known a wide variety of anti-motion sickness drugs, one typical example of which is known as an antihistamine, and disclosed in, for example, non-patent document 2. As an apparatus helpful in preventing motion sickness, there has been known a wide variety of headrests, one typical example of which is disclosed in, for example, patent document 1. The headrest is movable with respect to a seat in response to a motion of a vehicle as the vehicle goes around a curve. As another apparatus helpful in preventing motion sickness, there have been known a wide variety of display apparatuses, one typical example of which is disclosed in patent document 2, and informs vehicle occupants other than a driver about current and next motions of an vehicle by indicating information on whether or not the vehicle is turning to the right or the left, or about to turn to the right or the left, whether or not the vehicle is being accelerated or decelerated, or about to be accelerated or decelerated, and whether or not the vehicle is stopped.
patent document 1: Jpn. unexamined patent publication No. H07-252 (FIG. 1)
patent document 2: Jpn. unexamined patent publication No. 2002-154350 (FIG. 1)
non-patent document 1: "motion sickness and space motion sickness" written by Ryo Matsunaga, and Noriaki Takeda, otorhinolaryngological clinic, Vol. 81, No. 8, pages 1095-1120, 1998
non-patent document 2: Toyokiti Kinniti "internal therapy" JOHNS, Vol. 6, No. 9, 1990-9

### DISCLOSURE OF THE INVENTION

### PROBLEMS TO BE SOLVED BY THE INVENTION

The above-mentioned anti-motion sickness drug, however, encounters such a problem that the vehicle occupants tends to feel sleepy as a side effect resulting from this drug. The above-mentioned headrest, however, encounters such a problem that the vehicle occupants tend to have motion sickness. The above-mentioned apparatus, however, encounters such a problem that the vehicle occupants cannot pay attention to the indicated information while watching TV or the like in a moving vehicle. As a result, the vehicle occupants tend to have motion sickness.

It is, therefore, an object of the present invention to provide an image display apparatus which can inform and remind the vehicle occupants about the current and next motions of the vehicle while allowing the vehicle occupants to watch TV or the like in a moving vehicle, and reduce a burden to be imposed on the vehicle occupants by allowing the image controlling means to control the on-screen position to be occupied by the image produced by the image producing means.

### MEANS FOR SOLVING THE PROBLEMS

The alarm device according to the present invention comprises: motion detecting means for detecting a motion of a vehicle; displaying means to be provided in the vehicle, and adapted to display an image on a screen; and controlling means for controlling, on the basis of the motion of the vehicle detected by the motion detecting means, a display mode in which the image is displayed on the screen by the displaying means.

The alarm device thus constructed as previously mentioned according to the present invention can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving.

The alarm device according to the present invention further comprises acceleration detecting means for detecting an acceleration of the vehicle. The motion detecting means is adapted to detect the motion of the vehicle on the basis of the acceleration detected by the acceleration detecting means.

The alarm device thus constructed as previously mentioned according to the present invention can detect the motion of the vehicle with accuracy by reason that the motion detecting means is adapted to detect the motion of the vehicle on the basis of the acceleration detected by the acceleration detecting means.

In the alarm device according to the present invention, the motion detecting means is adapted to detect the motion of the vehicle by detecting how the vehicle is being operated by a driver.

The alarm device thus constructed as previously mentioned according to the present invention can detect, with accuracy, motions such as right and left turns, acceleration, and deceleration of the vehicle by reason that the motion detecting means is adapted to detect the motion of the vehicle by detecting how the vehicle is being operated by a driver on the basis of operating states of a steering wheel, a brake pedal, and the like.

The alarm device according to the present invention further comprises image taking means for taking an image of an object near or ahead of the vehicle. The motion detecting means is adapted to detect the motion of the vehicle on the basis of the image taken and outputted by the image taking means.

The alarm device thus constructed as previously mentioned according to the present invention can inform and remind the vehicle occupants about the next motion of the vehicle by reason that the motion detecting means is adapted to detect the motion of the vehicle on the basis of one or more images of a load ahead of the vehicle.

The alarm device according to the present invention further comprises navigation means for producing support information to support a driver in driving to a destination through an optimum travel route. The motion detecting means is adapted to detect the motion of the vehicle on the basis of support information on a road ahead of the vehicle.

The alarm device thus constructed as previously mentioned according to the present invention can inform and remind the vehicle occupants about the next motion of the vehicle by reason that the motion detecting means is adapted to detect the motion of the vehicle on the basis of one or more images of a load ahead of the vehicle.

In the alarm device according to the present invention, the controlling means is adapted to have the displaying means display, on a subsidiary screen forming part of the screen, the travel route information produced by the navigation means.

The alarm device thus constructed as previously mentioned according to the present invention can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving.

In the alarm device according to the present invention, the controlling means is adapted to change, on the basis of the motion of the vehicle detected by the motion detecting means, one or more of a size, an on-screen position, a transmission factor, and an image to be displayed on the subsidiary screen.

The alarm device thus constructed as previously mentioned according to the present invention can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving.

In the alarm device according to the present invention, the controlling means is adapted to change, on the basis of a position of a vehicle occupant sitting on a seat in the vehicle, an on-screen position in said subsidiary screen and/or an image to be displayed on the subsidiary screen.

The alarm device thus constructed as previously mentioned according to the present invention can inform and remind the vehicle occupants about the current and next motions of the vehicle by changing an on-screen position of an image to be displayed on one or more of the screen and the subsidiary screen if the vehicle is about to turn to the right or the left.

In the alarm device according to the present invention, the controlling means is adapted to change, on the basis of the motion of the vehicle detected by the motion detecting means, one or more of a shape and a size of the image displayed on the screen by the displaying means.

The alarm device thus constructed as previously mentioned according to the present invention can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by changing one or more of a shape and a size of the image on the basis of the motion of the vehicle.

In the alarm device according to the present invention, the controlling means is adapted to change, on the basis of a position of a vehicle occupant sitting on a seat in the vehicle, the shape of the image displayed on the screen.

The alarm device thus constructed as previously mentioned according to the present invention can inform and remind the vehicle occupants about the current and next motions of the vehicle by changing, in shape, an image to be displayed on the screen if the vehicle is about to turn to the right or the left.

The alarm device according to the present invention further comprises additional information producing means for producing additional information related to the motion of the vehicle detected by the motion detecting means. The displaying means is adapted to displaying, on the subsidiary screen, the additional information produced by the additional information producing means by superimposing, on the image to be displayed on the screen, the additional information produced by the additional information producing means.

The alarm device thus constructed as previously mentioned according to the present invention can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving.

In the alarm device according to the present invention, the controlling means is adapted to change, on the basis of the motion of the vehicle detected by the motion detecting means, one or more of a shape, a size, an on-screen position, and a transmission factor of the additional information.

The alarm device thus constructed as previously mentioned according to the present invention can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by controlling, on the basis of the motion of the vehicle detected by the motion detecting means, one or more of a shape, a size, an on-screen position, and a transmission factor of the additional information.

In the alarm device according to the present invention, the controlling means is adapted to change, on the basis of one or more positions of vehicle occupants, one or more of the shape and the on-screen position of the additional information.

The alarm device thus constructed as previously mentioned according to the present invention can inform the vehicle occupants about a direction in which the vehicle is turning, or about to turn by changing, on the basis of one or more positions of vehicle occupants, one or more of the shape and the on-screen position of the additional information.

The alarm device according to the present invention further comprises setting means for setting control information on a display mode in which the image is displayed on the screen by the displaying means. The controlling means is adapted to control the displaying means on the basis of control information on the display mode set by the setting means.

The alarm device thus constructed as previously mentioned according to the present invention can allow each vehicle occupant to set a display mode to the controlling means so as to allow the controlling means to control the displaying means with the display mode.

The vehicle according to the present invention comprises the above-mentioned alarm device.

The vehicle thus constructed as previously mentioned according to the present invention can inform the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving.

### ADVANTAGEOUS EFFECT OF THE INVENTION

The alarm device according to the present invention can inform the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by reason that the alarm device according to the present invention comprises: motion detecting means for detecting a motion of a vehicle; displaying means to be provided in the vehicle, and adapted to display an image on a screen; and controlling means for controlling, on the basis of the motion of the vehicle detected by the motion detecting means, a display mode in which the image is displayed on the screen by the displaying means.

### BRIEF DESCRIPTION OF THE DRAWINGS

FIG. **1** is a block diagram showing one embodiment of the alarm device according to the present invention.
FIG. **2** is a schematic view showing images, each of which is displayed by the displaying means in one of display modes.
FIG. **3** is a schematic view showing images, each of which is displayed with a subsidiary screen by the displaying means in another display mode.
FIG. **4** is a schematic view showing images, each of which is displayed with additional information displayed on a subsidiary screen by the displaying means in further display mode.
FIG. **5** is a flow chart showing an operation of the alarm device of the embodiment of the present invention.

### EXPLANATION OF THE REFERENCE NUMERALS

- **1:**: motion sickness preventing apparatus
- **2:**: acceleration detecting means
- **3:**: image taking means
- **4:**: navigation means
- **5:**: image producing means
- **6:**: motion detecting means
- **7:**: additional information producing means
- **8:**: controlling means
- **9:**: setting means
- **10:**: displaying means
- **201, 202, 204, 205, 208,** and **210:**: screen
- **301, 302, 306, 309, 312,** and **314:**: screen
- **401, 402, 405, 408, 411,** and **414:**: screen
- **203, 205, 207, 209,** and **211:**: image
- **303, 307, 310, 313,** and **315:**: subsidiary screen
- **304, 308,** and **311:**: travel route
- **305:**: current position
- **403, 406, 409, 412,** and **415:**: image displayed with additional information
- **404, 407, 410, 413,** and **416:**: arrow

### DETAILED DESCRIPTION OF THE PREFERRED EMBODIMENT

The embodiment of the alarm device according to the present invention will be described hereinafter with reference to the drawings.

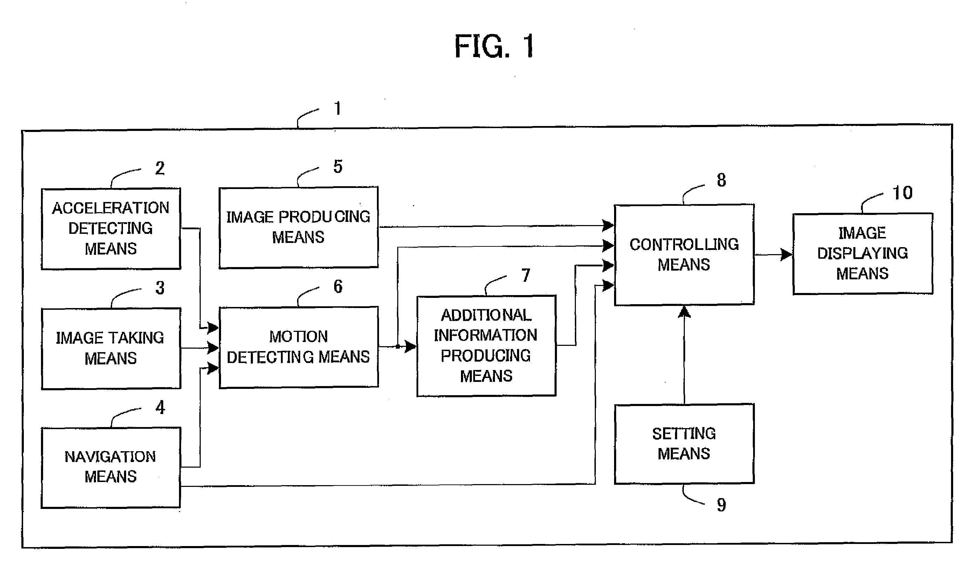

FIGS. **1** to **5** are views showing an embodiment of an alarm device according to the present invention, and a vehicle provided with the alarm device. The alarm device according to the embodiment of the present invention is constituted as a motion sickness preventing apparatus.

The constitution of the alarm device according to the embodiment of the present invention will be firstly described hereinafter with reference to FIG. **1.** The alarm device is mounted as a motion sickness preventing apparatus **1** on a vehicle. As shown in FIG. **1,** the motion sickness preventing apparatus **1** comprises acceleration detecting means **2,** image taking means **3,** navigation means **4,** image producing means **5,** motion detecting means **6,** additional information producing means **7,** controlling means **8,** setting means **9,** and displaying means **10.**

The acceleration detecting means **2** is constituted by at least one of a velocity sensor for detecting a velocity of the vehicle, an acceleration sensor for detecting an acceleration of the vehicle, an angular velocity sensor for detecting an angular velocity of the vehicle, and a swing sensor for detecting a frequency of a swing (pitching, rolling, and yawing) of the vehicle. The acceleration detecting means **2** detects an acceleration of the vehicle in at least one of leftward/rightward, upward/downward, and forward/backward directions on the basis of at least one of the acceleration detected by the acceleration sensor, the velocity detected by the velocity sensor, the angular velocity detected by the angular velocity sensor, and the frequency of the swing detected by the swing sensor.

The motion detecting means **6** detects at least one of left-turning, right-turning, accelerating, and decelerating motions of the vehicle on the basis of the acceleration detected by the acceleration detecting means **2.**

The navigation means **4** is constituted by a conventional navigation apparatus, and includes a GPS (Global Positioning System) receiver for calculating a current position of the vehicle, a memory unit having road map information stored therein, an input unit for setting information on a destination, a travel route calculating unit for calculating an optimum travel route to the inputted destination from the calculated current position, and superimposing the calculated optimum travel route on a road map, and a display unit for displaying the road map with the optimum travel route.

The motion detecting means **6** detects, on the basis of information outputted by the navigation means **4,** at least one of left-turning, right-turning, accelerating, and decelerating motions of the vehicle. If the navigation means **4** is in an active state to support a driver in driving to the destination through the calculated optimum travel route, the motion detecting means **6** receives information on the calculated optimum travel route from the navigation means **4.** If, on the other hand, the navigation means **4** is in an inactive state not to support a driver in driving to the destination, the motion detecting means **6** receives, from the navigation means **4,** the road map information such as for example angles of the right-hand and left-hand turns, a curvature of the road, an angle of a sloping road, a road surface, a width, whether or not there is no traffic light, whether or not there is no stop sign, whether or not the vehicle is traveling along a right turn lane or a left turn lane, and traffic signs such as "ONE-WAY STREET", "STOP", and "DO NOT ENTER".

The image taking means **3** is constituted by a camera, and takes an image of an object near or ahead of the vehicle.

The motion detecting means **6** processes the image taken and outputted by the image taking means **3**, extracts one or more features of a road ahead of the vehicle from the processed image, and detects, on the basis of the features of the road, at least one of left-turning, right-turning, accelerating, and decelerating motions of the vehicle. Here, the information on one or more features of a road ahead of the vehicle extracted from the images taken by the image taking means **3** is substantially the same the information on a road ahead of the vehicle received from the navigation means **4.**

The motion detecting means **6** may be constituted by a computer mounted on the vehicle, the computer having a central processing unit (CPU), a read only memory (ROM), and a random access memory (RAM), and the like. The motion detecting means **6** detects the motion of the vehicle by detecting how the vehicle is being operated by the driver. More specifically, the motion detecting means 6 detects, on the basis of an operating state of at least one of a steering wheel, an accelerator, a brake pedal, a direction indicator, and a hazard indicator, at least one of left-turning, right-turning, accelerating, and decelerating motions of the vehicle.

Here, the motion detecting means **6** may assume a multistage mode to detect degrees of the left-turning, right-turning, accelerating, and decelerating motions of the vehicle. If, for example, the judgment is made that the vehicle is about to be accelerated, or being accelerated, the motion detecting means **6** compares the acceleration detected by the acceleration detecting means **2** with two or more threshold levels.

The image producing means **5** is constituted by an audio visual apparatus such as for example a television set and a DVD player, a game machine, or the like.

The displaying means **10** is constituted by a liquid crystal display unit, an image projector for projecting an image on a screen, or the like, and displays an image such as a movie produced by an audio visual apparatus such as for example a television set and a DVD player, a game machine, or the like. It is preferable that the displaying means **10** may be positioned in the close vicinity of a rear seat, fixed to its ceiling, or arbitrarily positioned to allow the image displayed on the screen to be preferentially watched by vehicle occupants other than the driver. Needless to say, the image displayed on the screen may be watched by the driver.

If the image produced by the image producing means **5** is displayed by the displaying means **10,** the controlling means **8** controls the displaying means **10** in each display mode on the basis of the motion of the vehicle detected by the motion detecting means **6.** The controlling means **8** may be constituted by above-mentioned computer.

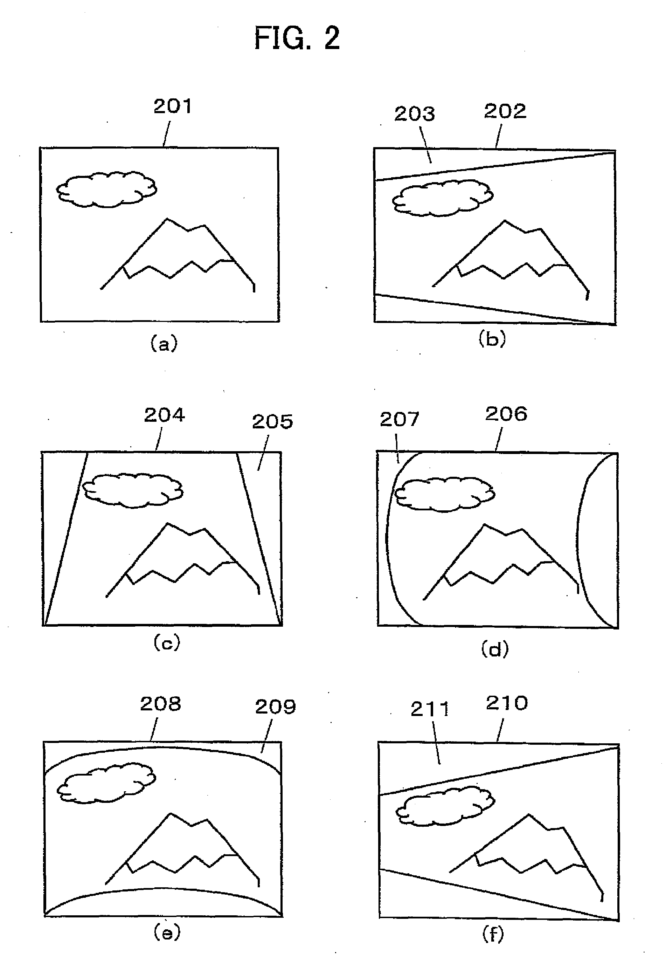

FIG. **2** is a schematic view showing images, each of which is displayed by the displaying means **10** in a display mode. The controlling means **8** changes, on the basis of the degrees of the left-turning, right-turning, accelerating, and decelerating motions of the vehicle, the shape of the image to be displayed on the screen **201** as shown in FIG. **2(a).** More specifically, the controlling means **8** ensures that the image displayed on the screen **201** reminds the vehicle occupants of the left-turning, right-turning, accelerating, and decelerating motions of the vehicle by changing, on the basis of the degrees of the left-turning, right-turning, accelerating, and decelerating motions of the vehicle, the shape of the image over a predetermined period of time if the degrees of the left-turning, right-turning, accelerating, and decelerating motions of the vehicle exceeds a predetermined threshold level, by starting to compute an elapsed time, and by restoring the changed image to the original if the elapsed time exceeds a predetermined value. The controlling means **8** changes the shape of the image displayed on the screen **201** on the basis of a position of one or more vehicle occupants sitting on sets in the vehicle.

The following description will be directed to the case that the displaying means **10** has a screen pointed in a direction opposite to the traveling direction of the vehicle, the screen being in face-to-face relationship with one or more vehicle occupants sitting on front-facing seats. If the vehicle is about to turn to the left, or turning to the left, the controlling means **8** tapers, toward the left of the screen **201,** the image to be display on the screen **201.** The image tapered toward the left of the screen **201** is similar to the image **203** displayed on the screen **202** and shown in FIG. **2(b),** and reminds the vehicle occupants of the left-tuning motion of the vehicle. If the vehicle is about to turn to the right, or turning to the right, the controlling means **8** tapers, toward the right of the screen **201,** the image to be display on the screen **201.** The image tapered toward the right of the screen **201** reminds the vehicle occupants of the right-tuning motion of the vehicle. If the vehicle is about to be accelerated, or being accelerated in the traveling direction, the controlling means **8** tapers, toward an upward direction of the screen **201,** the image to be display on the screen **201.** The image tapered toward the upward direction of the screen **201** is similar to the image **205** displayed on the screen **204** and shown in FIG. **2(c),** and reminds the vehicle occupants of the accelerating motion of the vehicle. If the vehicle is about to be decelerated, or being decelerated against the traveling direction, the controlling means **8** tapers, toward a downward direction of the screen **201,** the image to be display on the screen **201.** The image tapered toward the downward direction of the screen **201** reminds the vehicle occupants of the decelerating motion of the vehicle. Additionally, the controlling means **8** may be tapers, toward the downward direction of the screen **201,** the image to be display on the screen **201** if the vehicle is about to be accelerated, or being accelerated in the traveling direction. The controlling means **8** may taper, toward the upward direction of the screen **201,** the image to be display on the screen **201** if the vehicle is about to be decelerated, or being decelerated against the traveling direction.

If the vehicle is about to turn to the left, or turning to the left, the controlling means **8** may change, in shape, the image to be display on the screen **201** to ensure that the image changed in shape is similar to the image **207** displayed on the screen **206,** and reminds the vehicle occupants of the ten-tuning motion of the vehicle. If, on the other hand, the vehicle is about to turn to the right, or turning to the right, the controlling means **8** may change, in shape, the image to be display on the screen **201** to ensure that the image changed in shape is similar to the image **208** displayed on the screen **208,** and reminds the vehicle occupants of the right-tuning motion of the vehicle.

The controlling means **8** decides a magnitude of the change in shape of the image on the basis of the degree of the motion of the vehicle detected by the motion detecting means **6.** If, for example, the degree of the left-turning motion of the vehicle is relatively large, and more specifically, the vehicle is about to be accelerated, or being accelerated at an increasing rate on a left-hand sharp curve, the controlling means **8** changes from the image **201** to the image **210** with multistage approach. Needless to say, the present invention is not limited to the left-turning motion of the vehicle. The controlling means **8** changes, in shape, the image with multistage approach on the basis of the degree of each of the right-turning, accelerating, and decelerating motions of the vehicle.

The following description will be directed to the case that the displaying means **10** has a screen pointed in a direction the same as the traveling direction of the vehicle, the screen being in face-to-face relationship with one or more vehicle occupants sitting on rear-facing seats. The controlling means **8** controls, in shape, the image to ensure that the image controlled in shape is in mirror-reversed relationship with the image displayed on the screen shown in FIG. **2(b)** or FIG. **2(d).** If, for example, the vehicle is about to turn to the left, or turning to the left, the controlling means **8** changes, in shape, the image to be displayed on the screen **201** to ensure that the image changed in shape is in mirror-reversed relationship with the image shown in FIG. **2(b),** in other words, to taper, toward the right of the screen **201,** the image to be display on the screen **201** to ensure that the image tapered toward the right of the screen **201** reminds the vehicle occupants sitting on the rear-facing seats of the left-tuning motion of the vehicle. If, on the other hand, the vehicle is about to turn to the right, or turning to the right, the controlling means **8** changes, in shape, the image to be displayed on the screen **201** to ensure that the image changed in shape is the same in shape as the image shown in FIG. **2(b)** or FIG. **2(d),** and reminds the vehicle occupants sitting on the rear-facing seats of the right-tuning motion of the vehicle. Additionally, the controlling means **8** may changes the shape of the image, based on whether the vehicle occupants are sitting on the front-facing seats or the rear-facing seats, in response to the acceleration and deceleration of the vehicle. From the foregoing description, it will be understood that the alarm device according to the present invention can inform and remind the vehicle occupants sitting on the rear-facing seats of the left-tuning, or right-turning motion of the vehicle.

The controlling means **8** controls the display mode of the displaying means **10** on the basis of the motion of the vehicle detected by the motion detecting means **6** to allow the displaying means **10** to display, on the subsidiary screen forming part of the screen, the travel route information, i.e., one or more images outputted by the navigation means **4.**

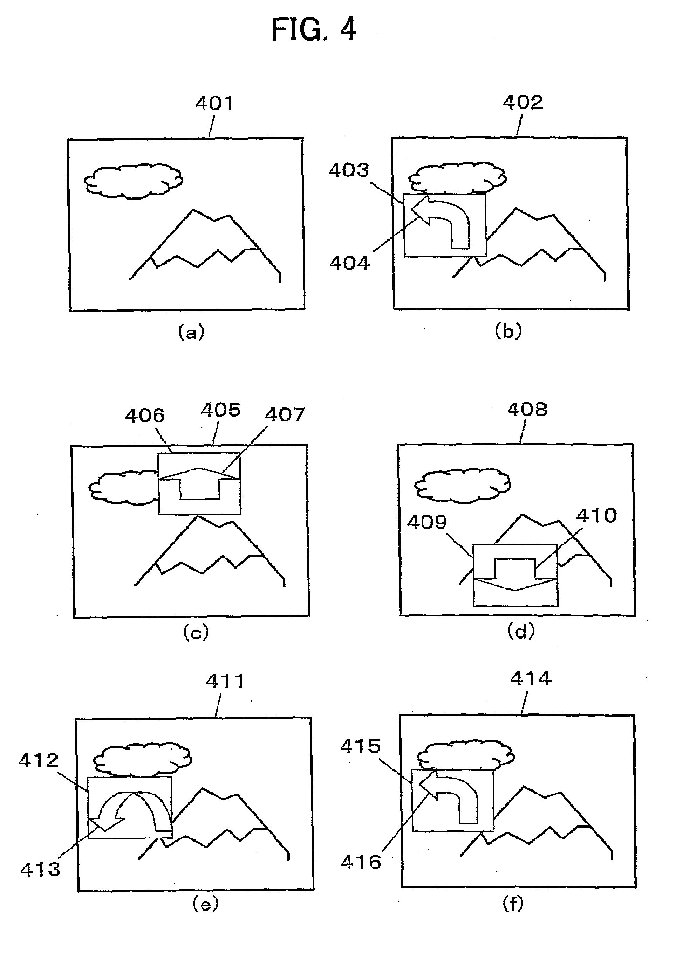

The following description will be then directed to another display mode in which the subsidiary screen is superimposed on the screen by the displaying means **10.** If the TV program is being displayed on the screen **301** as shown in **3(a),** the controlling means **8** interrupts the TV program to allow the displaying means **10** to display the support information, i.e., one or more images outputted by the navigation means **4** on the screen over a period of time, or to ensure that the images outputted by the navigation means **4** is displayed on the subsidiary screen **303** forming part of the screen **402** as shown in FIG **4(b)**.

The controlling means **6** may allow the displaying means **10** to indicate each of the accelerating, decelerating, right-turning, and left-turning motions of the vehicle by ensuring that the support information outputted by the navigation means **4** is displayed on the screen over a period of time on the basis of the detected degrees of the left-turning, right-turning, accelerating, and decelerating motions of the vehicle, the TV program is then displayed on the screen after the period of time. The controlling means **8** may change either or both of the subsidiary screen **303** and the information to be displayed on the subsidiary screen **303** on the basis of the positions of the vehicle occupants sitting on seats.

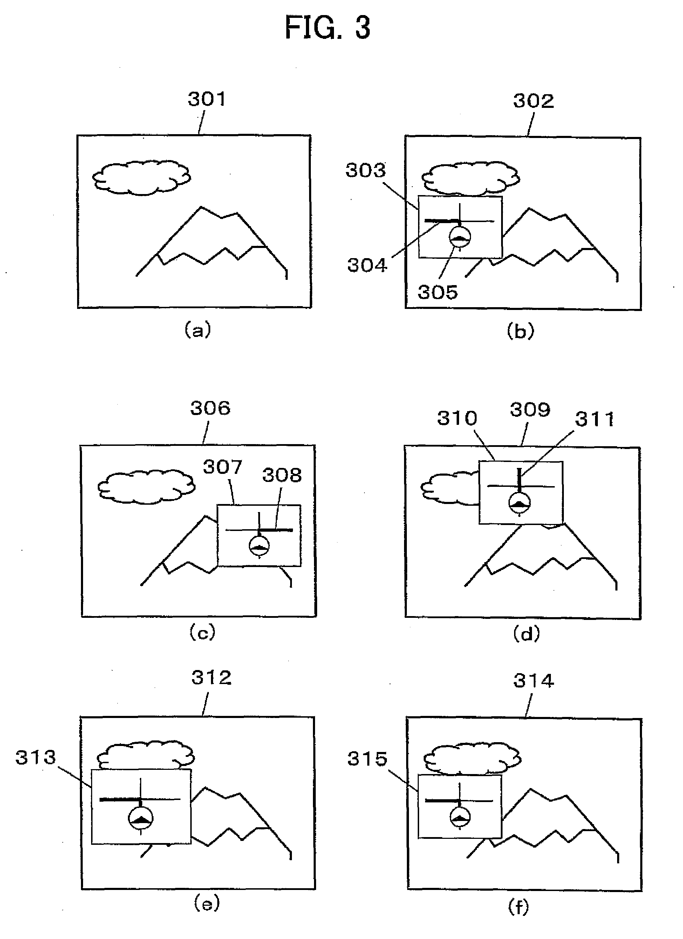

The following description will be directed to the case that the displaying means **10** has a screen pointed in a direction opposite to the traveling direction of the vehicle, the screen being in face-to-face relationship with one or more vehicle occupants sitting on front-facing seats. If the vehicle is about to turn to the left, or turning to the left, the controlling means **8** controls the displaying means 10 to ensure that the support information outputted by the navigation means **4** is displayed on a subsidiary screen **303,** and remind the vehicle occupants of the left-turning motion of the vehicle. In FIG. **3(b)**, the road map is being displayed on the subsidiary screen **303** with a marker indicative of not only the current position **305** but also the travel direction of the vehicle and the optimum travel route **304.** Additionally, the controlling means 8 may ensure that the image of the object near or ahead of the vehicle is displayed on a subsidiary screen **303** by controlling the displaying means **10** if the information on destination is not inputted to the navigation means **4.**

If the vehicle is about to turn to the right, or turning to the right, the controlling means **8** allows the displaying means **10** to display, on a subsidiary screen **307,** the travel route information produced by the navigation means **4** as shown in FIG. **3(c)** to ensure that the travel route information displayed on the subsidiary screen **307** reminds the vehicle occupants of the right-tuning motion of the vehicle. From FIG. **3(c),** it will be easy understood that the vehicle is about to turn to the right, or turning to the right by reason that the subsidiary screen **307** is defined on right-hand part of the screen **306.** The subsidiary screen **307** may be the same in position as the subsidiary screen **303** shown in FIG. **3(b).**

If the vehicle is about to be accelerated, or being accelerated in a traveling direction, the controlling means **8** allows the displaying means **10** to display the travel route information outputted by the navigation means **4** on a subsidiary screen **310** shown in FIG. **3(d)** to ensure that the travel route information displayed on the subsidiary screen **310** reminds the vehicle occupants of the accelerating motion of the vehicle. If, on the other hand, the vehicle is about to be decelerated, or being decelerated in a traveling direction, the controlling means **8** allows the displaying means **10** to display the travel route information outputted by the navigation means **4** on a subsidiary screen defined in the lower part of the screen **309** shown in FIG. **3(d)** to ensure that the travel route information displayed on the subsidiary screen reminds the vehicle occupants of the decelerating motion of the vehicle. Additionally, the controlling means **8** may allow the displaying means **10** to display the travel route information outputted by the navigation means **4** on a subsidiary screen **310** shown in FIG. **3(d)** to ensure that the travel route information displayed on the subsidiary screen **310** reminds the vehicle occupants of the accelerating motion of the vehicle if the vehicle is about to be decelerated, or being decelerated in a traveling direction.

The controlling means **8** controls, in size, the subsidiary screen on the basis of the degree of the motion of the vehicle detected by the motion detecting means **6.** If, for example, the degree of the left-turning motion of the vehicle is relatively large, and more specifically, the vehicle is about to be decelerated, or being decelerated at an increasing rate on a left-hand sharp curve, the controlling means **8** changes to the subsidiary screen **313** from the subsidiary screen **303** with multistage approach on the basis of the degree of the decelerating motion of the vehicle. Needless to say, the present invention is not limited to degree of the left-turning motion of the vehicle. The controlling means **8** controls, in size, the subsidiary screen on the basis of the degree of the right-turning, accelerating, and decelerating motions of the vehicle.

The controlling means **8** changes, in transparency, the subsidiary screen on the basis of the motion of the vehicle detected by the motion detecting means **6.** If the subsidiary screen has a relatively low transparency, the vehicle occupants can watch the additional information with clarity. If, on the other hand, the subsidiary screen has a relatively large transparency, the vehicle occupants can watch TV program. If one or more of the accelerating, decelerating, right-turning, and left-turning motions of the vehicle are relatively large in degree, the controlling means **8** ensures that the subsidiary screen **303** reduced in transparency is displayed on the screen **302** over a period of time as shown in FIG **3(b).** If one or more of the accelerating, decelerating, right-turning, and left-turning motions of the vehicle becomes smaller in degree with time, the controlling means **8** ensures that the subsidiary screen **303** increased in transparency is displayed on the screen **402** over a period of time. If the vehicle is about to be accelerated, or being accelerated while turning to the left or the right, or going straight, the controlling means **8** may reduce, transparency, the subsidiary screen on the basis of the acceleration of the vehicle to ensure that the subsidiary screen reduced in transparency is displayed over a period of time.

The following description will be directed to the case that the displaying means **10** has a screen pointed in a direction the same as the traveling direction of the vehicle, the screen being in face-to-face relationship with one or more vehicle occupants sitting on rear-facing seats. The controlling means **8** may allow the image displaying means **10** to display, on the subsidiary screen reversed in position or in direction, an image over the predetermined period of time. This subsidiary screen is opposite in position or in direction to the subsidiary screen shown in FIG. **3(b)** or FIG **3(b).** If, for example, the vehicle is about to turn to the left, or turning to the left, the controlling means **8** allows the displaying means **10** to display, on the subsidiary screen, an image the same as the image displayed on the subsidiary screen shown in FIG. **3(c).** In this case, the subsidiary screen is defined on the right-hand part of the screen. However, the subsidiary screen may be defined on the left-hand part of the screen. Needless to say, the present invention is not limited to the right-turning motion of the vehicle. The controlling means **8** allows the displaying means **10** to display, on the subsidiary screen, an image based on the left-turning, accelerating, and decelerating motions of the vehicle. Even if the vehicle occupants are sitting on the rear-facing seats, the alarm device according to the present invention can inform and remind the vehicle occupants are sitting on the rear-facing seats of the right-turning, accelerating, and decelerating motions of the vehicle.

The additional information producing means **7** produces additional information indicative of the motion of the vehicle detected by the motion detecting means **6.** The additional information producing means **7** may be constituted by the above-mentioned computer. The controlling means **8** superimposes, on the basis of the motion of the vehicle detected by the motion detecting means **6,** the additional information produced by the additional information producing means **7** on the image to be displayed on the screen by the displaying means **10.**

The following description will be then directed to another display mode in which the additional information is superimposed on the image by the displaying means **10** as shown in FIG. **4.** If TV program is being displayed on the screen **401** as shown in **4(a),** the controlling means **8** interrupts the TV program to allow the displaying means **10** to display the additional information on the screen **401** over a period of time, or to allow the displaying means **10** to superimpose the additional information **403** on the TV program to ensure that the additional information 403 is displayed on a subsidiary screen forming part of the screen **402** as shown in FIG **4(b)**.

If the degrees of the left-turning, right-turning, accelerating, and decelerating motions of the vehicle exceeds a predetermined threshold level, the controlling means **8** may interrupt the TV program to allow the displaying means **10** to display, on the screen **401** over a period of time, the additional information produced by the additional information producing means **7,** and to return to the TV program after the period of time so as to remind the vehicle occupants of the left-turning, right-turning, accelerating, and decelerating motions of the vehicle. Additionally, the controlling means **8** may change, in shape, the additional information to be superimposed on the TV program, or to change, in position, the additional information to be superimposed on the TV program on the basis of a position of each vehicle occupant.

The following description will be directed to the case that the displaying means **10** has a screen pointed in a direction opposite to the traveling direction of the vehicle, the screen being in face-to-face relationship with one or more vehicle occupants sitting on front-facing seats. If, for example, the vehicle is about to turn to the left, or turning to the left, the controlling means **8** allows the displaying means **10** to display the additional information **403** including an arrow **404** for reminding the vehicle occupants of the left-turning motion of the vehicle.

If the vehicle is about to turn to the right, or turning to the right, the controlling means **8** allows the displaying means **10** to display the additional information including an arrow for reminding the vehicle occupants of the right-turning motion of the vehicle. Additionally, this additional information may be the same in position as the additional information **403** shown in FIG **4(b).** In order to remind the vehicle occupants of the right-turning motion of the vehicle with ease, this additional information may be superimposed on right-hand part of the screen **402**.

If the vehicle is about to be accelerated, or being accelerated in the traveling direction, the controlling means **8** allows the displaying means **10** to display the additional information **406** including an arrow **407** for reminding the vehicle occupants of the accelerating motion of the vehicle as shown in FIG. **4(c).** If the vehicle is about to be decelerated, or being decelerated in the traveling direction, the controlling means **8** allows the displaying means **10** to display the additional information **409** including an arrow **410** for reminding the vehicle occupants of the accelerating motion of the vehicle as shown in FIG **4(d).** Additionally, the controlling means **8** may control, in position, the subsidiary screen to ensure that the additional information is displayed on the subsidiary screen superimposed in the upper part of the screen **405** shown in FIG **4(c)** if the vehicle is about to be accelerated, or being accelerated, and to ensure that the additional information is displayed on the subsidiary screen superimposed in the lower part of the screen **408** shown in FIG **4(d)** if the vehicle is about to be decelerated, or being decelerated. On the other hand, the controlling means **8** may superimposes the subsidiary screen on a designated on screen position without changing, in position, the subsidiary screen in response to the acceleration and deceleration of the vehicle. If the vehicle is about to be accelerated, or being accelerated in the traveling direction, the controlling means **8** may allow displaying means **10** to display, in the subsidiary screen, an arrow **410** shown in FIG. **4(b).** If, on the other hand, the vehicle may be about to be decelerated, or being decelerated in the traveling direction, the controlling means **8** allows displaying means **10** to display, in the subsidiary screen, an arrow **407** shown in FIG. **4(b)**.

The controlling means **8** changes, in shape, the additional information on the basis of the motion of the vehicle detected by the motion detecting means **6.** If, for example, the vehicle is about to be accelerated, or being accelerated at an increasing rate on a left-hand sharp curve, the controlling means **8** changes, in shape, the additional information **403** including an arrow **404** for reminding the vehicle occupants of the left-turning motion of the vehicle on the basis of the degree of the left-turning motion of the vehicle. Needless to say, the present invention is not limited to the left-turning motion of the vehicle. The controlling means 8 changes, in shape, the arrow for reminding the vehicle occupants of the right-turning, accelerating, and decelerating motions of the vehicle.

The controlling means **8** changes, in size, the additional information on the basis of the degree of the motion of the vehicle detected by the motion detecting means **6.** If, for example, the degree of the left-turning motion of the vehicle is relatively large, more specifically, the vehicle is about to be accelerated, or being accelerated at an increasing rate on a left-hand sharp curve, the controlling means **8** increases, in size, the additional information with multistage approach. Additionally, the controlling means **8** changes, in size, the additional information with multistage approach on the basis of the degree of each of the right-turning, accelerating, and decelerating motions of the vehicle.

The controlling means **8** changes, in transparency, the additional information on the basis of the motion of the vehicle detected by the motion detecting means **6.** If the additional information superimposed on the TV program has a relatively low transparency, the vehicle occupants can watch the additional information with clarity. If, on the other hand, the additional information superimposed on the TV program has a relatively large transparency, the vehicle occupants can watch TV program. If one or more of the accelerating, decelerating, right-turning, and left-turning motions of the vehicle are relatively large in degree, the controlling means **8** ensures that the additional information **403** reduced in transparency is displayed on the screen **402** over a period of time as shown in FIG. **4(b).** If one or more of the accelerating, decelerating, right-turning, and left-turning motions of the vehicle becomes smaller in degree with time, the controlling means **8** ensures that the additional information **415** increased in transparency is displayed on the screen **402** over a period of time. If the vehicle is about to be accelerated, or being accelerated while turning to the left or the right, or going straight, the controlling means **8** may reduces, transparency, the additional information on the basis of the acceleration of the vehicle to ensure that the additional information reduced in transparency is displayed over a period of time.

The following description will be then directed to the case that the displaying means **10** has a screen pointed in a direction the same as the traveling direction of the vehicle, the screen being in face-to-face relationship with one or more vehicle occupants sitting on rear-facing seats. The controlling means **8** may allows the displaying means **10** to display, on the subsidiary screen, a mirror-reversed image indicative of the motion of the vehicle over a period of time. If, for example, the vehicle is about to turn to the right, or turning to the right, the controlling means **8** may allow the displaying means **10** to display, on the subsidiary screen, the additional information **403** shown in FIG. 4(b). In this case, the subsidiary screen **403** is defined on right-hand part of the screen **402** as shown in FIG. **4(b).** However, the subsidiary screen **403** may be defined on left-hand part of the screen **402.** Needless to say, the present invention is not limited to the right-turning motion of the vehicle. The controlling means **8** allows the displaying means **10** to display the secondary information on the subsidiary screen on the basis of the left-turning, accelerating, and decelerating motions of the vehicle. From the foregoing description, it will be understood that the alarm device according to the present invention can inform and remind the vehicle occupants sitting on the rear-facing seats of the real turn direction of the vehicle.

In FIG. **4,** the additional information produced by the additional information producing means **7** is constituted by an arrow. However, the additional information may be constituted by one or more characters for reminding the vehicle occupants of the right-turning, left-turning, accelerating, and decelerating motions of the vehicle, animated figures corresponding to the right-turning, left-turning, accelerating, and decelerating motions of the vehicle, or animated figures different in color from each other so as to remind the vehicle occupants of the right-turning, left-turning, accelerating, and decelerating motions of the vehicle.

The setting means **9** is constituted by a keyboard, a touch panel, or the like, and sets information on a display mode to the controlling means **8.** The controlling means **8** controls the displaying means 10 in the display mode set by the setting means **9.**

The setting means **9** sets whether or not to change the image to be displayed on the screen by the displaying means **10.** More specifically, the setting means **9** sets, as control information needed to enhance an effect of allowing the vehicle occupants to enjoy comfortable driving, a period of time over which the image is being changed in shape, a size of the image to be displayed on the screen, or a shape of the image to be displayed on the screen.

The setting means **9** sets whether or not to allow the displaying means **10** to display, on the screen, the support information outputted by the navigation means **4.** More specifically, the setting means **9** sets, as control information needed to enhance an effect of allowing the vehicle occupants to enjoy comfortable driving, a period of time with which the subsidiary screen is displayed, shape, size, position, or transparency of the additional information.

The setting means **9** sets whether or not to allow the displaying means **10** to display, on the subsidiary screen, the additional information produced by the additional information producing means **7.** More specifically, the setting means **9** sets, as control information needed to enhance an effect of allowing the vehicle occupants to enjoy comfortable driving, a period of time with which the additional information is displayed on the subsidiary screen by the additional information producing means **7,** shape, size, position, or transparency of the additional information.

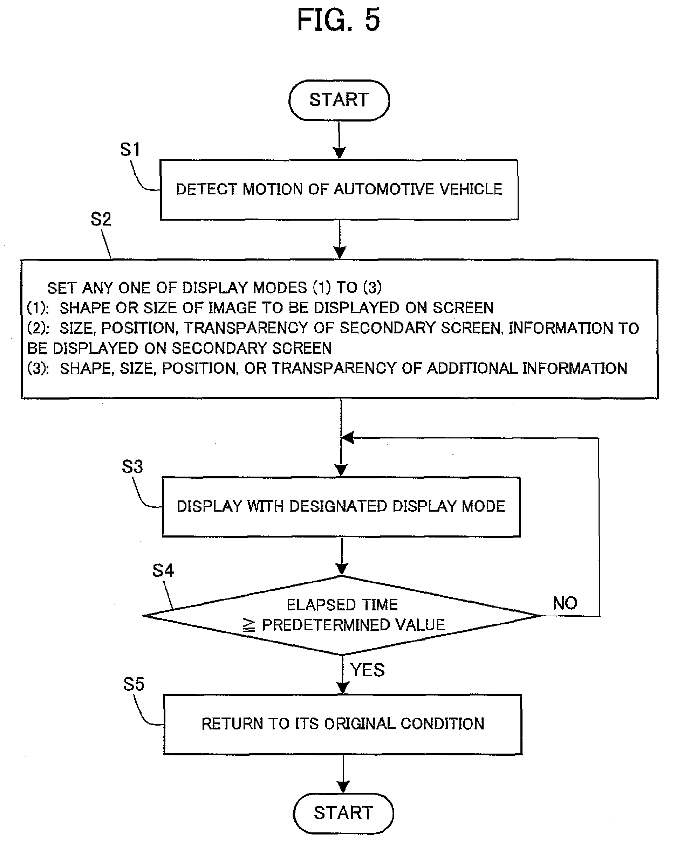

FIG. **5** is a general flowchart showing a motion sickness preventing program to be stored by the ROM of the controlling means **8,** and to be executed by the CPU of the controlling means **8.** The operation of the motion sickness preventing apparatus **1** thus constructed, and constituted by the alarm device according to the embodiment of the present invention will be described hereinafter with reference to FIG. **5.**

Firstly, the motion detecting means **6** detects (in the step **S1**) a current motion of the vehicle. More specifically, the motion detecting means **6** detects degrees of the right and left turns of the vehicle on the basis of the acceleration detected in a horizontal direction by the acceleration detecting means **2,** the steering angle of the steering wheel of the vehicle, the travel route information outputted by the navigation means **4,** or the like. Here, the motion detecting means **6** may detect degrees of the right and left turns of the vehicle on the basis of an image outputted by the image taking means **3** as information on an object ahead of the vehicle.

If the vehicle is being accelerated, or about to be accelerated in the road ahead, the motion detecting means **6** detects the degree of the motion of the vehicle on the basis of the acceleration detected in the longitudinal direction by the acceleration detecting means **2,** an operating state of a throttle valve (an accelerator), an operating state of a brake pedal, and the support information outputted by the navigation means **4.**

The motion detecting means **6** may detect the degree of the motion of the vehicle on the basis of an acceleration calculated from information on speeds sampled at fixed intervals or the like. As another example, the motion detecting means **6** may detect the degree of the motion of the vehicle on the basis of a current speed of the vehicle calculated from current and previous images of a road ahead of the vehicle taken by the image taking means **3.**

The following display modes **(1), (2),** and **(3)** are selectively set to the controlling means **8** by the setting means **9** (in the step **S2**).
**(1):** shape or size of a screen on which the image is displayed.
**(2):** size, position, or transparency of a subsidiary screen on which the support information outputted by the navigation means **4** is displayed, and information to be displayed on the subsidiary screen.
**(3):** shape, size, position, or transparency of the additional information to be produced by the additional information producing means **7.**
The motion sickness preventing apparatus can enhance an effect of allowing the vehicle occupants to enjoy comfortable driving by having the controlling means **8** assume any one of the above-mentioned display modes **(1), (2),** and **(3).**

The controlling means 8 changes the shape of the image to be displayed on the screen, displays the support information outputted by the navigation means **4,** or displays the additional information produced by the additional information producing means **7** on a subsidiary screen forming part of the screen, on the basis of the control information set by the setting means **9** (in the step **S3**).

In this embodiment, the setting means **9** allows the vehicle occupants to selectively set the above-mentioned display modes (1), (2), and (3). However, one of the above-mentioned display modes (1), (2), and (3) is previously set by the setting means **9.**

The controlling means **8** starts to compute an elapsed time after completing the operation in the step S3, and judges (in the step **S4)** whether or not the elapsed time exceeds a predetermined value. If the judgment is made in the step **S4** that the elapsed time exceeds the predetermined value, the controlling means **8** resets the displaying means **10** to an original display mode.

From the foregoing description, it will be understood that the motion sickness preventing apparatus **1** according to the embodiment of the present invention can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by reason that the motion sickness preventing apparatus **1** comprises: motion detecting means **6** for detecting a motion of a vehicle; displaying means **10** for displaying an image on a screen in the vehicle; and controlling means **8** for controlling, on the basis of the motion of the vehicle detected by the motion detecting means **6,** a display mode in which the image is displayed on the screen by the displaying means **10.**

The motion sickness preventing apparatus **1** can detect the motion of the vehicle with accuracy by reason that the motion sickness preventing apparatus **1** further comprises acceleration detecting means **2** for detecting an acceleration of the vehicle, the motion detecting means **6** detects the motion of the vehicle on the basis of the acceleration detected by the acceleration detecting means **2.**

The motion sickness preventing apparatus **1** can detect, with accuracy, motions such as right and left turns, acceleration, and deceleration of the vehicle by reason that the motion detecting means **6** detects the motion of the vehicle by detecting how the vehicle is being operated by a driver on the basis of operating states of a steering wheel, a brake pedal, and the like.

The motion sickness preventing apparatus **1** can inform and remind the vehicle occupants about the next motion of the vehicle by reason that the motion sickness preventing apparatus **1** further comprises image taking means **3** for taking an image of an object near or ahead of the vehicle, and the motion detecting means 6 detects the motion of the vehicle on the basis of one or more images of a load ahead of the vehicle.

The motion sickness preventing apparatus **1** can inform and remind the vehicle occupants about the next motion of the vehicle by reason that the motion sickness preventing apparatus **1** further comprises navigation means **4** for producing support information to support a driver in driving to a destination through an optimum travel route, and the motion detecting means **6** detects the motion of the vehicle on the basis of the travel route information outputted by the navigation means **4.** Additionally, the motion detecting means **6** may be adapted to detect the motion of the vehicle on the basis of at least one or more of information on how the vehicle is being operated by a driver, one or more images taken by the image taking means **3,** and the information outputted by the navigation means **4.**

The motion sickness preventing apparatus **1** can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by reason that the controlling means **8** have the displaying means **10** display, on a subsidiary screen forming part of the screen, the travel route information outputted by the navigation means **4.**

The motion sickness preventing apparatus **1** can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by reason that the controlling means **8** changes, on the basis of the motion of the vehicle detected by the motion detecting means **6,** one or more of a size, an on-screen position, a transmission factor, and an image to be displayed on the subsidiary screen.

The motion sickness preventing apparatus **1** can inform and remind the vehicle occupants about the current and next motions of the vehicle by changing an on-screen position of an image to be displayed on one or more of the screen and the subsidiary screen if the vehicle is about to turn to the right or the left the controlling means **8** is adapted to change, on the basis of a position of a vehicle occupant sitting on a seat in the vehicle, an image to be displayed on one or more of the screen and the subsidiary screen.

The motion sickness preventing apparatus **1** can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by changing one or more of a shape and a size of the image on the basis of the motion of the vehicle by reason that the controlling means **8** is adapted to change, on the basis of the motion of the vehicle detected by the motion detecting means **6,** one or more of a shape and a size of the image displayed on the screen by the displaying means **10.**

The motion sickness preventing apparatus **1** can change, on the basis of a position of a vehicle occupant sitting on a seat in the vehicle, the shape of the image to be displayed on the screen by reason that the controlling means **8** is adapted to change, on the basis of a position of a vehicle occupant sitting on a seat in the vehicle, the shape of the image displayed on the screen. The motion sickness preventing apparatus **1** can inform and remind the vehicle occupants about a direction in which the vehicle is turning if the vehicle is about to turn to the right or the left.

The motion sickness preventing apparatus **1** can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by reason that the motion sickness preventing apparatus **1** further comprises additional information producing means **7** for producing additional information related to the motion of the vehicle detected by the motion detecting means **6,** the displaying means **10** for displaying, on the screen, the additional information produced by the additional information producing means **7** by superimposing, on the image, the additional information produced by the additional information producing means **7.**

The motion sickness preventing apparatus **1** can inform and remind the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by reason that the controlling means **8** changes, on the basis of the motion of the vehicle detected by the motion detecting means **6,** one or more of a shape, a size, an on-screen position, and a transmission factor of the additional information.

The motion sickness preventing apparatus **1** can inform the vehicle occupants about a direction in which the vehicle is turning, or about to turn by changing, on the basis of one or more positions of vehicle occupants, one or more of the shape and the on-screen position of the additional information by reason that the controlling means **8** changes, on the basis of one or more positions of vehicle occupants, one or more of the shape and the on-screen position of the additional information.

The motion sickness preventing apparatus **1** can allow each vehicle occupant to set a display mode to the controlling means **8** so as to allow the controlling means **8** to control the displaying means **10** with the display mode by reason that motion sickness preventing apparatus **1** further comprises setting means **9** for setting control information on a display mode in which the image is displayed on the screen by the displaying means **10.** The controlling means **8** controls the displaying means **10** on the basis of control information on the display mode set by the setting means **9.**

The vehicle according to the embodiment of the present invention can inform the vehicle occupants about the current and next motions of the vehicle while allowing the vehicle occupants to watch TV or the like in a moving vehicle, reduce a burden to be imposed on the vehicle occupants watching TV or the like, and enhance an effect of allowing the vehicle occupants to enjoy comfortable driving by reason that the vehicle according to the embodiment of the present invention comprises a motion sickness preventing apparatus **1.**

The controlling means **8** may be adapted to change the shape of the image to be displayed on the screen, to display the support information outputted by the navigation means **4,** or to display the additional information produced by the additional information producing means **7** on a subsidiary screen forming part of the screen, on the basis of the control information set by the setting means **9.**

In this embodiment, the motion sickness preventing apparatus **1** comprises one displaying means **10.** However, the motion sickness preventing apparatus **1** may comprise two or more displaying means **10.** The controlling means **8** may be adapted to control display modes of each displaying means **10.** The setting means **9** may be adapted to independently set control information to each displaying means **10.**

In this embodiment, the motion detecting means **6** decides the degree of the motion of the vehicle on the basis of each degree of an acceleration, a deceleration a right turn, and a left turn of the vehicle. However, the motion detecting means **6** may be adapted to detect whether or not the vehicle is being accelerated, whether or not the vehicle is being decelerated, whether or not the vehicle is turning to the right, and whether or not the vehicle is turning to the left.

### INDUSTRIAL APPLICABILITY OF THE PRESENT INVENTION

As will be seen from the foregoing description, the alarm device according to the present invention has an advantageous effect of inform and remind the vehicle occupants about the current and next motions of the vehicle while allowing the vehicle occupants to watch TV or the like in a moving vehicle, and reduce a burden to be imposed on the vehicle occupants, and useful as an apparatus for enhancing an effect of allowing the vehicle occupants to enjoy comfortable driving.

## Claims

1. An alarm device, comprising:
motion detecting means for detecting a motion of a vehicle;
displaying means to be provided in said vehicle, and adapted to display an image on a screen; and
controlling means for controlling, on the basis of said motion of said vehicle detected by said motion detecting means, a display mode in which said image is displayed on said screen by said displaying means.

2. The alarm device as set forth in claim 1, which further comprises acceleration detecting means for detecting an acceleration of said vehicle, and in which
said motion detecting means is adapted to detect said motion of said vehicle on the basis of said acceleration detected by said acceleration detecting means.

3. The alarm device as set forth in claim 1, in which said motion detecting means is adapted to detect said motion of said vehicle by detecting how said vehicle is being operated by a driver.

4. The alarm device as set forth in claim 1, which further comprises image taking means for taking an image of an object near or ahead of said vehicle, and in which
said motion detecting means is adapted to detect said motion of said vehicle on the basis of said image taken and outputted by said image taking means.

5. The alarm device as set forth in claim 1, which further comprises navigation means for producing support information to support a driver in driving to a destination through an optimum travel route, and in which
said motion detecting means is adapted to detect said motion of said vehicle on the basis of travel route information outputted by said navigation means.

6. The alarm device as set forth in claim 5, in which said controlling means is adapted to have said displaying means display, on a subsidiary screen forming part of said screen, said travel route information produced by said navigation means.

7. The alarm device as set forth in claim 6, in which said controlling means is adapted to change, on the basis of a position of a vehicle occupant sitting on a seat in said vehicle, an on-screen position in said subsidiary screen and/or an image to be displayed on said subsidiary screen.

8. The alarm device as set forth in claim 6, in which said controlling means is adapted to change, on the basis of said motion of said vehicle detected by said motion detecting means, one or more of a size, an on-screen position, a transmission factor, and an image to be displayed on said subsidiary screen.

9. The alarm device as set forth in claim 8, in which said controlling means is adapted to change, on the basis of a position of a vehicle occupant sitting on a seat in said vehicle, an on-screen position in said subsidiary screen and/or an image to be displayed on said subsidiary screen.

10. The alarm device as set forth in claim 1, in which said controlling means is adapted to change, on the basis of said motion of said vehicle detected by said motion detecting means, one or more of a shape and a size of said image displayed on said screen by said displaying means.

11. The alarm device as set forth in claim 10, in which said controlling means is adapted to change, on the basis of a position of a vehicle occupant sitting on a seat in said vehicle, said shape of said image displayed on said screen.

12. The alarm device as set forth in claim 1, which further comprises additional information producing means for producing additional information related to said motion of said vehicle detected by said motion detecting means, and in which
said displaying means is adapted to displaying, on said subsidiary screen, said additional information produced by said additional information producing means by superimposing, on said image to be displayed on said screen, said additional information produced by said additional information producing means.

13. The alarm device as set forth in claim 11, in which said controlling means is adapted to change, on the basis of said motion of said vehicle detected by said motion detecting means, one or more of a shape, a size, an on-screen position, and a transmission factor of said additional information.

14. The alarm device as set forth in claim 13, in which said controlling means is adapted to change, on the basis of one or more positions of vehicle occupants, one or more of said shape and said on-screen position of said additional information.

15. The alarm device as set forth in any one of claims 1 to 14, which further comprises setting means for setting control information on a display mode in which said image is displayed on said screen by said displaying means, and in which
said controlling means is adapted to control said displaying means on the basis of control information on said display mode set by said setting means.

16. A vehicle comprising the alarm device as set forth in any one of claims 1 to 14.

## Amended claims

### Amended claims under Art. 19.1 PCT

1. (original): An alarm device, comprising:
motion detecting means for detecting a motion of a vehicle;
displaying means to be provided in said vehicle, and adapted to display an image on a screen; and
controlling means for controlling, on the basis of said motion of said vehicle detected by said motion detecting means, a display mode in which said image is displayed on said screen by said displaying means.

2. (original): The alarm device as set forth in claim 1, which further comprises acceleration detecting means for detecting an acceleration of said vehicle, and in which
said motion detecting means is adapted to detect said motion of said vehicle on the basis of said acceleration detected by said acceleration detecting means.

3. (original): The alarm device as set forth in claim 1, in which said motion detecting means is adapted to detect said motion of said vehicle by detecting how said vehicle is being operated by a driver.

4. (original): The alarm device as set forth in claim 1, which further comprises image taking means for taking an image of an object near or ahead of said vehicle, and in which
said motion detecting means is adapted to detect said motion of said vehicle on the basis of said image taken and outputted by said image taking means.

5. (original): The alarm device as set forth in claim 1, which further comprises navigation means for producing support information to support a driver in driving to a destination through an optimum travel route, and in which
said motion detecting means is adapted to detect said motion of said vehicle on the basis of travel route information produced by said navigation means.

6. (original): The alarm device as set forth in claim 5, in which said controlling means is adapted to have said displaying means display, on a subsidiary screen forming part of said screen, said travel route information produced by said navigation means.

7. (original): The alarm device as set forth in claim 6, in which said controlling means is adapted to change, on the basis of a position of a vehicle occupant sitting on a seat in said vehicle, an on-screen position in said subsidiary screen and/or an image to be displayed on said subsidiary screen.

8. (original): The alarm device as set forth in claim 6, in which said controlling means is adapted to change, on the basis of said motion of said vehicle detected by said motion detecting means, one or more of a size, an on-screen position, a transmission factor, and an image to be displayed on said subsidiary screen.

9. (original): The alarm device as set forth in claim 8, in which said controlling means is adapted to change, on the basis of a position of a vehicle occupant sitting on a seat in said vehicle, an on-screen position in said subsidiary screen and/or an image to be displayed on said subsidiary screen.

10. (original): The alarm device as set forth in claim 1, in which said controlling means is adapted to change, on the basis of said motion of said vehicle detected by said motion detecting means, one or more of a shape and a size of said image displayed on said screen by said displaying means.

11. (original): The alarm device as set forth in claim 10, in which said controlling means is adapted to change, on the basis of a position of a vehicle occupant sitting on a seat in said vehicle, said shape of said image displayed on said screen.

12. (original): The alarm device as set forth in claim 1, which further comprises additional information producing means for producing additional information related to said motion of said vehicle detected by said motion detecting means, and in which
said displaying means is adapted to displaying, on said subsidiary screen, said additional information produced by said additional information producing means by superimposing, on said image to be displayed on said screen, said additional information produced by said additional information producing means.

13. (original): The alarm device as set forth in claim 11, in which said controlling means is adapted to change, on the basis of said motion of said vehicle detected by said motion detecting means, one or more of a shape, a size, an on-screen position, and a transmission factor of said additional information.

14. (original): The alarm device as set forth in claim 13, in which said controlling means is adapted to change, on the basis of one or more position of vehicle occupants, one or more of said shape and said on-screen position of said additional information.

15. (currently amended): The alarm device as set forth in claim 1, which further comprises setting means for setting control information on a display mode in which said image is displayed on said screen by said displaying means, and in which
said controlling means is adapted to control said displaying means on the basis of control information on said display mode set by said setting means.

16. (currently amended): A vehicle comprising The alarm device as set forth in claim 1.
